# EUROPEAN PATENT APPLICATION

(11) **EP 1 862 379 A1**
(43) Date of publication of application: **05.12.2007**
(21) Application number: 06290873.6
(22) Date of filing: 30.05.2006
(51) Int. Cl.: B62D 25/14

(54) **Dashboard support module and corresponding motor vehicle**

(71) Applicant: Peugeot Citroen Automobiles SA, 78140 Vélizy-Villacoublay (FR); Wagon Automotive GmbH, 63857 Waldaschaff (DE)
(72) Inventor: Barre, Philippe, 94340 Joinville Le Pont (FR); Tsen, Cynthia, 78140 Velizy Villacoublay (FR); Bonnot, David, 91140 Gif-sur-Yvette (FR); Valente, Enzo-Patrick, 94320 Thiais (FR); Menton, Cédric, 93420 Villepinte (FR); Motte, Bruno, 95240 Cormeilles en Parisis (FR); Trancart, Olivier, 78790 Courgent (FR); Charbonel, Daniel, 78570 Chantelop Les Vignes (FR)
(74) Representative: Habasque, Etienne J. Jean-François

(57) **Abstract**

This dashboard support module for a motor vehicle comprises a first profile section (4) extending in a profile section direction (P); a second profile section (6) extending substantially parallel with the first profile section (4) and at a distance therefrom; and a first element (8, 10) for connecting the first and second profile sections to each other.

The connecting element (8, 10) has a triangular shape.

Application to the dashboards of touring vehicles.

## Description

In the field of motor vehicles, dashboards are known which are connected to the structure of the vehicle by means of a support module. These support modules generally comprise a profile section extending transversely in the vehicle.

The known support modules are also provided with a connection called a "lower windshield support connection" or "LWS connection", which is a beam bearing some of the forces and vibrations of the steering column/steering wheel couple. The LWS connection generally extends between the profile section of the support module and a structural member of the vehicle, generally the bulkhead.

At present, the LWS connection is secured to the bulkhead by means of a screw/nut system which is put in place manually, the nut being connected to the bulkhead of the vehicle. The securing of the LWS connection is effected through the opening which is formed in the instrument panel and which is to receive the speedometer; it requires an operator to enter via the door of the vehicle. Thus, this operation makes it necessary to mount the speedometer cluster after the support has been mounted and impairs the ergonomics of the assembly station.

In addition, the design of the lower windshield support connection has to be meticulous, given that this connection must be breakable in order to prevent the steering column from moving towards the driver in the case of impact.

Consequently, the object of the invention is to propose a support module which has sufficient inherent rigidity to be able to dispense with the lower windshield support connection, while at the same time being light in weight.

To that end, the invention relates to a support module as indicated above, characterized in that it comprises
- a first profile section which, in particular, is terminated at each of its ends by a flange for connection to a vehicle structure, the first profile section extending in a profile section direction;
- a second profile section extending substantially parallel with the first profile section and at a distance therefrom; and
- a first element for connecting the first and second profile sections to each other, the connecting element having a triangular shape.

According to particular embodiments, the support module comprises one or more of the following features:
- the connecting element has, in the profile section direction, a closed cross-section surrounding a through-opening;
- one of the first and second profile sections is secured to a corner of the triangle, and the other of the first and second profile sections is secured to a side of the triangle;
- the first profile section is secured to the side of the triangle and the second profile section is secured to the corner of the triangle;
- the profile section secured to the side of the triangle is secured substantially to the centre of the side halfway between the two adjacent corners of the triangle;
- the module comprises a second element for connecting the first and second profile sections to each other, which second element is identical to the first connecting element;
- the module comprises a steering column support, and the two connecting elements are located one on each side of the steering column support;
- a strut is secured to the linear portion of the first profile section and one end of the second profile section is secured to the strut;
- in the installed position of the module, the first profile section is located above the second profile section; and
- in the installed position of the module, the first profile section is located below the second profile section.

The invention relates also to a motor vehicle of the type comprising a structure provided with a floor and two lateral wing casings, and also a dashboard support module, characterized in that the support module is a module as defined above.

The invention will be better understood on reading the following description which is given purely by way of example and with reference to the appended drawings, in which:
- Figure 1 is a perspective view of a support module according to a first embodiment of the invention; and
- Figure 2 is a perspective view of a support module according to a second embodiment of the invention.

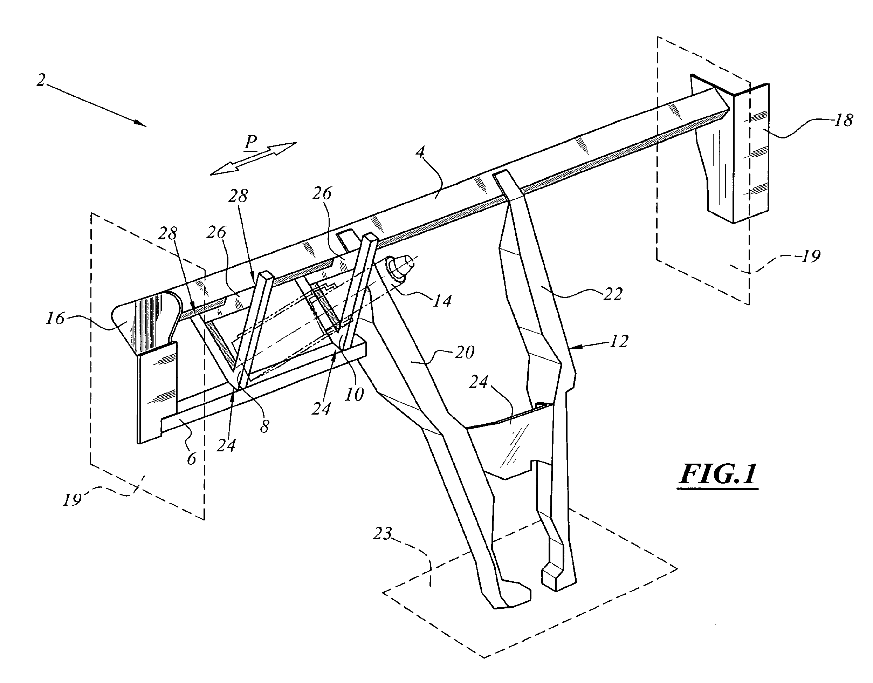

Figure 1 shows in perspective a dashboard support module according to a first embodiment, marked by the general reference 2.

The support module 2 is suitable for supporting a motor vehicle dashboard (not shown) and comprises a first straight, upper, profile section 4 extending in a profile section direction P, a second straight, lower, profile section 6 extending parallel with the first profile section and at a distance therefrom, and also two elements 8, 10 for connecting the first 4 and second 6 profile sections to each other.

The connecting elements 8 and 10 are located at a distance from the ends of the profile sections 4 and 6.

The dashboard support module 2 is also provided with a strut 12 and with a steering column support 14, indicated with dot-dash lines in Figure 1.

The first profile section 4 extends, in the mounted state, over substantially the entire width of the motor vehicle, and is terminated at each of its lateral ends by a connecting flange 16 and 18 which are suitable for securing the support module 2 to the structure 19 of the vehicle.

The strut 12 is formed by two stays 20, 22 connected by a cross-member 24, the strut 12 having a substantially H-shaped configuration. The two stays 20, 22 are secured by a first end to the linear portion of the first profile section 4 and by a second end to the vehicle floor 23. The strut 12 absorbs some of the forces borne by the first profile section 4 and transmits them to the structure of the vehicle via the floor 23.

The strut may also be formed by a single stay connecting the profile section to the floor.

The second profile section 6 is secured by one of its ends to the connecting flange 16 and by the other end to the stay 20 of the strut 12. Thus, the second profile section 6 extends only on the driver's side of the dashboard support module 2.

The connecting elements 8 and 10 have a substantially triangular shape and each is provided with a corner 24 and a side 26, opposite the corner 24. The second profile section 6 is secured to the corner 24 of the connecting elements 8 and 10, and the first profile section 4 is secured to each side 26, opposite the corner 24. More precisely, the first profile section 4 is secured to the side 26, halfway between the two adjacent corners 28 of the triangle.

The triangle surrounds a through-opening which is triangular in shape, seen in the profile section direction P. The largest dimension of the opening, measured in a plane perpendicular to the direction P, is at least twice the largest dimension of the first profile section 4, measured in a plane perpendicular to the direction P.

The two connecting elements 8, 10 may, in particular, be identical, which facilitates manufacture. They are preferably located one on each side of the steering column support 14, which leads to considerable rigidity of the support module. The triangular shape of the connecting elements 8, 10 enables the forces exerted by the steering column to be distributed.

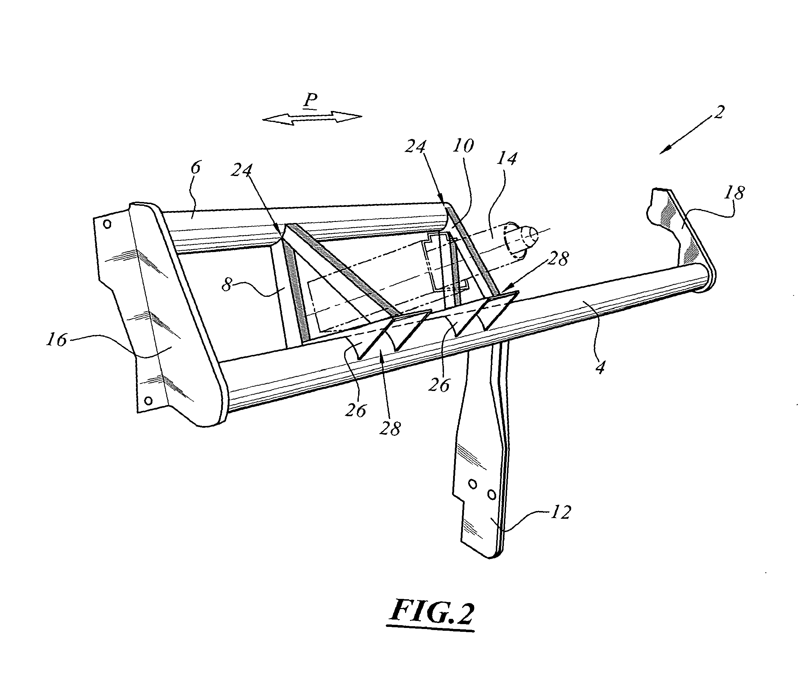

Figure 2 shows a second embodiment of a support module according to the invention, which differs from that in Figure 1 by the following. Analogous elements bear the same references.

The first profile section 4 is located below the second profile section 6. Furthermore, the two profile sections 4 and 6 have a circular cross-section.

The strut 12 of the second embodiment is formed by a single-piece beam.

The dashboard support module according to the invention has a high degree of rigidity for a given weight, which enables the lower windshield support connection to be dispensed with and thus facilitates vehicle assembly.

For, the removal of the lower windshield support connection enables the assembly process to be simplified. Thus, the speedometer cluster can be mounted directly on the dashboard outside the main assembly line; the assembly constituted by the dashboard and the speedometer cluster is then mounted on the support module to which the invention relates.

The support module of the invention permits an easy and economical assembly process and improves the ergonomics of mounting the speedometer cluster.

## Claims

1. Dashboard support module for a motor vehicle, **characterized in that** it comprises
- a first profile section (4) which, in particular, is terminated at each of its ends by a flange (16, 18) for connection to a vehicle structure, the first profile section extending in a profile section direction (P);
- a second profile section (6) extending substantially parallel with the first profile section (4) and at a distance therefrom; and
- a first element (8, 10) for connecting the first (4) and second (6) profile sections to each other, the connecting element having a triangular shape.

2. Support module according to claim 1, **characterized in that** the connecting element (8, 10) has, in the profile section direction (P), a closed cross-section surrounding a through-opening.

3. Support module according to claim 1 or 2, **characterized in that** one of the first and second profile sections (4, 6) is secured to a corner (24) of the triangle, and the other of the first and second profile sections (4, 6) is secured to a side (26) of the triangle.

4. Support module according to claim 3, **characterized in that** the first profile section (4) is secured to the side (26) of the triangle and the second profile section (6) is secured to the corner (24) of the triangle.

5. Support module according to claim 3 or 4, **characterized in that** the profile section secured to the side of the triangle is secured substantially to the centre of the side (26) halfway between the two adjacent corners of the triangle.

6. Support module according to any one of claims 1 to 5, **characterized in that** the module comprises a second element (10, 8) for connecting the first and second profile sections to each other, which second element is identical to the first connecting element.

7. Support module according to claim 6, **characterized in that** the module comprises a steering column support (14), and **in that** the two connecting elements (8, 10) are located one on each side of the steering column support (14).

8. Support module according to any one of claims 1 to 7, **characterized in that** a strut (12) is secured to the linear portion of the first profile section (4) and one end of the second profile section (6) is secured to the strut (12).

9. Support module according to any one of claims 1 to 8, **characterized in that**, in the installed position of the module, the first profile section (4) is located above the second profile section (6).

10. Support module according to any one of claims 1 to 8, **characterized in that**, in the installed position of the module, the first profile section (4) is located below the second profile section (6).

11. Motor vehicle, of the type comprising a structure provided with a floor and two lateral wing casings, and also a dashboard support module, **characterized in that** the support module is a module according to any one of the preceding claims.
